# EUROPEAN PATENT SPECIFICATION

(11) **EP 1 027 209 B1**
(45) Date of publication and mention of the grant of the patent: **02.04.2003**
(21) Application number: 97913754.4
(22) Date of filing: 27.10.1997
(51) Int. Cl.: B29D 30/06, B22F 7/08, B29C 33/42

(54) **ARTICLE AND METHOD FOR COMPOSITE TIRE MOLD BLADES**
FORMKÖRPER UND VERFAHREN FÜR VERBUNDMESSER FÜR REIFENFORMEN
ARTICLE ET PROCEDE POUR LAMELLES DE MOULES A PNEUS COMPOSITES

(43) Date of publication of application: 16.08.2000
(73) Proprietor: THE GOODYEAR TIRE & RUBBER COMPANY, Akron, Ohio 44316-0001 (US)
(72) Inventor: JACOBS, Bernard, Byron, Akron, OH 44319 (US); LONEY, Gregory, Lee, Cuyahoga Falls, OH 44223 (US); ROOT, Richard, Allen, East Amherst, NY 14051 (US)
(74) Representative: Leitz, Paul
(86) International application number: US9719258
(87) International publication number: WO99021701

(56) References cited:
- DE-A- 2 206 897
- DE-B- 1 169 651
- FR-A- 1 573 492
- FR-A- 2 137 809
- GB-A- 1 460 592
- US-A- 2 736 924

## Description

### Technical Field

The present invention relates to blades for the curing mold. More particularly to a composite type blade which has rounded ends and a method of fabricating such composite blades.

### Background of the Invention

Blades for tire curing molds are well known in the art of tire manufacture. Such blades are conventionally made from a running length or strip of a metallic material such as steel, stainless steel or brass. The strip is generally about 0,020 inches (0,5 mm) to 0,040 inches (1 mm) thick and has a width of about one half to 1-1/2 inches (12,7 to 38 mm). Sometimes the strips are of solid form other times perforated strips are used to form the blade.

In US-A- 3,880,020 a method and apparatus for making blades is disclosed which enables small quantity lots of a multiplicity of different styles of blades to be made rapidly and economically. The method and apparatus permits blades to be blanked out from the stack of material by a plurality of punch and die sets while the stock remains securely attached to an endless loop carrier. The invention uses a plurality of sub-presses for forming bends in the blade if desired.

In US-A- 3,581,535 a similar method and apparatus for making blades is disclosed. The method and apparatus for making blades for use in tire molds includes piercing, notching, bending or otherwise altering the shape of a free end of strip material by successively positioning the free end and a plurality of shape altering tools in operative engagement and cutting off the formed blade from the free end.

The reader can appreciate or visualize finished blades of a given style falling into a large box after being formed and cut from the strip of blade stock.

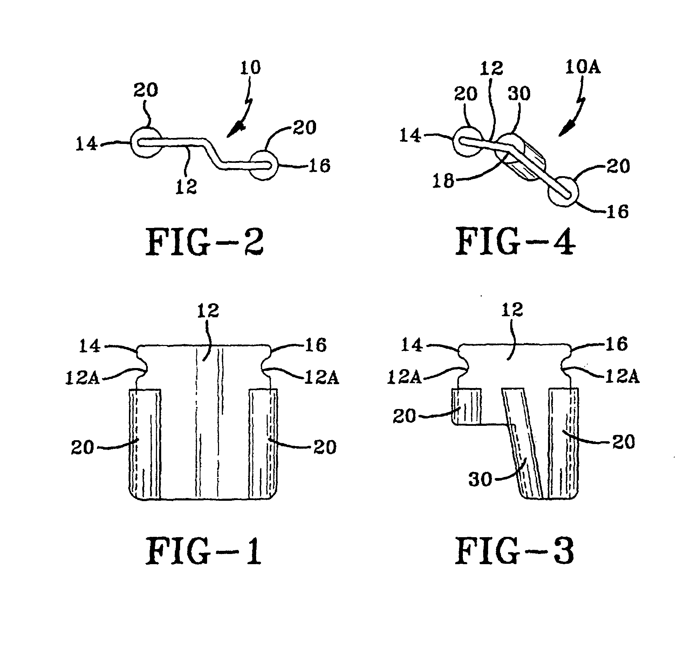

The complexity of this automated blade forming apparatus make it abundantly clear that the formed blade must be rather simple in construction as shown in the appended prior art Figs. 4 through 9. Bends, cuts, notches and holes are possible. What has not been possible to date was the employment of more complex shapes or varying the thickness of the blade at a specific location.

Fr-A- 2,137,309 disclose the features recited in the preamble of claim 1.

The blade creates a sipe, which is a narrow groove or incision in the tread. The lateral ends of the blade, even if polished or ground round is a subsequent deburring operations, are sufficiently narrow to initiate crack propagation at this highly stressed region of tread.

To avoid this problem it has been an objective of the present invention to create blade ends and blade bends that are effective at stress relieving the tread elements adjacent the resultant sipe.

### Summary of the Invention

A blade for use in a tire mold is formed from blade blanks having at least two ends and at least one end cap having a substantially enlarged cross-section relative to the blade blank. Each end cap is attached to one end of the blade blank.

The end cap is of a powdered metal. To facilitate attachment of the end cap at least one of the ends is crimped, notched or perforated so that when the end of the blade blank is placed in the mold for forming the end cap the crimped notched or perforated end is encapsulated by the material used to form the end cap. Preferably the enlarged end cap has a rounded cross section.

The blank may include one or more bends between the two ends. A bend cap having a substantially enlarged cross-section is attached to the blade blank at a bend, the bend cap being attached in a similar way as the end cap and preferably has a rounded cross-section.

Preferably the blade blank is metal, of brass, steel or stainless steel.

The method of fabricating a composite blade for use in a tire mold has the steps of forming a blade blank having at least two ends placing one or more ends of the blade blank in a die and molding a second powdered metal material around the one or more ends forming a rounded end at least partially encapsulating the one or more ends of the steel blade blank. The method may further have the step of crimping, notching or perforating the blade blank ends prior to molding thus encapsulating the crimp, notch or perforated end. The method may further include bending the blade blank and then molding a second powdered metal material around the bend similar to the method of making the end cap.

### Brief Description of the Figures

Fig. 1 is a view of a blade having the ends encapsulated with cap ends. Fig. 2 is a top view of Fig. 1.

Fig. 3, is a view of a blade having the ends capped and a bend encapsulated with a bend cap.

Fig. 4 is a top view of Fig. 3.

Figs. 5, 6, and 7 are cross sectional view showing a crimped end, a notch and perforation as additional means for attaching cap ends or cap bends.

Fig. 8 is a portion of the strip used to form a blade.

Figs. 9 through 13 show various prior art blades of differing shapes commonly used in tire molds, each such blade has ends or ends and bends which create stress risers in the tread element.

Figs. 14 - 25 are representations of plan and top views of a variety of different composite blades of the present invention.

### Detailed Description of the Invention

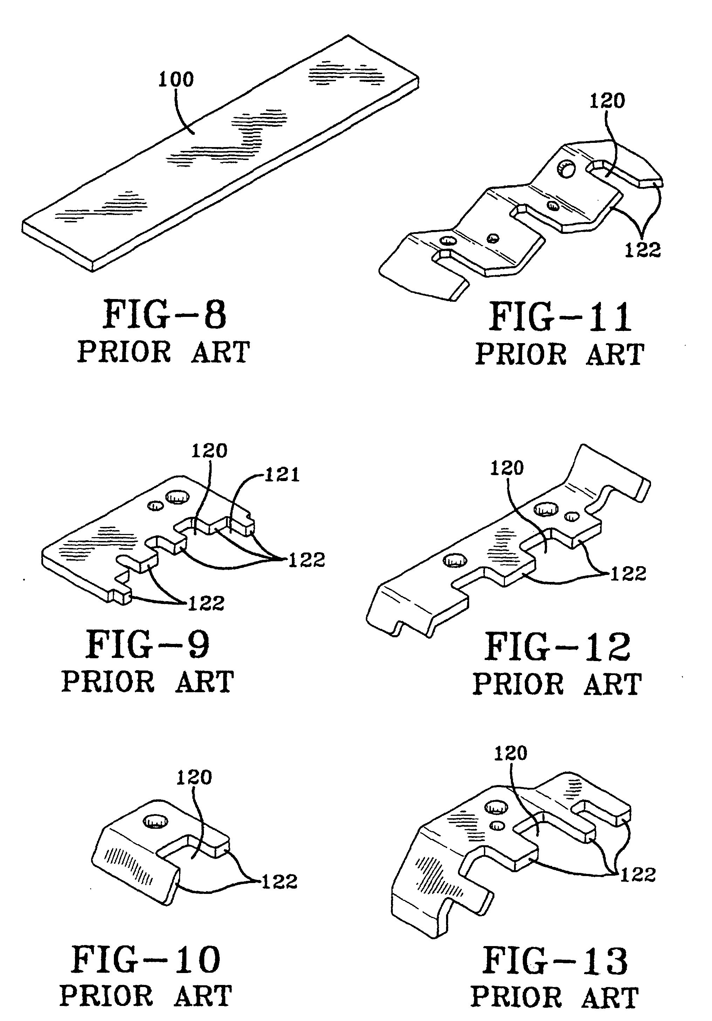

With reference to Fig. 8 a portion of a strip (100) of metallic material commonly used to form blades for tire curing molds is shown.

The resultant blades once stamped or punched out from the strip (100) took various shapes as shown in Figs. 9 through 13. The blades could have any number of slots (120) or cuts (121) to form the various projections (122), the projections for forming the resultant sipe in the tread of a molded tire. These features are well known in the tire building art.

With attention now to Figs. 1 and 2, a composite blade (10) of the present invention is shown. The composite blade (10) is formed of a blade blank (12), the blade blank (12) having a pair of ends (14, 16). Encapsulating the ends (14, 16) are end caps (20). Each end cap (20) at least partially if not completely encapsulates the respective ends (14, 16) as shown. The top view of the blade (10) shows that the end caps (20) are of a cross-section that is preferably rounded or circular. Alternatively the end cap (20) can be of any number of shapes such as elliptical, conical etc., preferably avoiding sharp edges which can induce crack propagation.

In Figs. 3 and 4 the blade (10A) further has a bend (18) the bend (18) being encapsulated by a bend cap (30). The bend cap (30) preferably is a similar cross section as the end caps (20).

If the blade blanks (12) are 0,020 to 0,030 of an inch (0,5 mm to 0,8 mm) thick, the end caps (20) and bend caps (30) preferably are about four times the thickness of the blade blank (12). At a thickness of greater than 0,030 to 0,050 of an inch (0,8 mm to 1,3 mm) the end caps (30) and bend caps (30) are about three times the thickness of the blade blank (12).

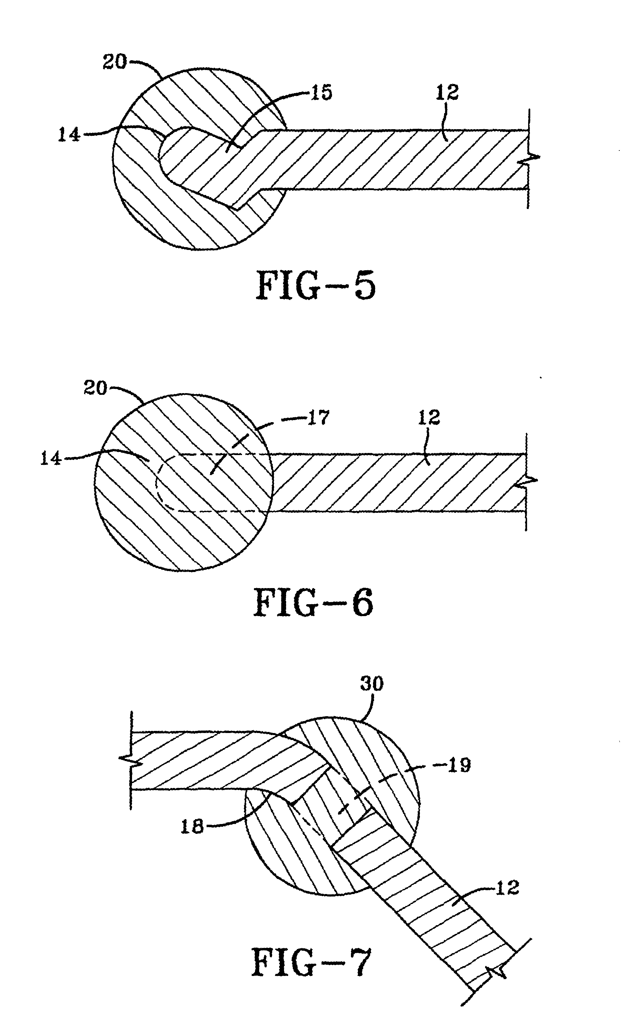

In Figs. 5, 6 and 7, several means for securing the end caps (20) or bend caps (30) around the blade blank (12) are shown. The first means shown in Fig. 5 is crimping the end of (14 or 16) of a blade blank (12). The crimped end (15) provides an increased surface contact area and cantilevered spring loaded portion which when placed in a mold under high pressure results in better adhesion of the end cap (20).

It must be remembered that these end caps (20) and bend caps (30) must be sufficiently anchored to the blade (12) or the tire mold to insure that they do not pull out when the tread is extracted from the tire cure mold.

In Fig. 6, the end cap (20) is shown encapsulating an end (14 or 16) having a notch (17). In Fig. 7 the bend cap (30) is shown encapsulating a bend (18), the blade blank having perforated holes (19) which when placed in a cap mold have the cap material flow into the holes (19) which anchors the bend cap (30) to the blade blank (12).

The use of notches (17), perforated holes (19) or crimped ends (15) can be found at ends (14, 16) or at the bends (18). Alternatively no mechanical enhancement to attachment of the caps to the blades may be needed, particularly if the cap ends (20) or the bend cap (30) is inclined or sloped relative to the radial direction when placed in an annular tread mold.

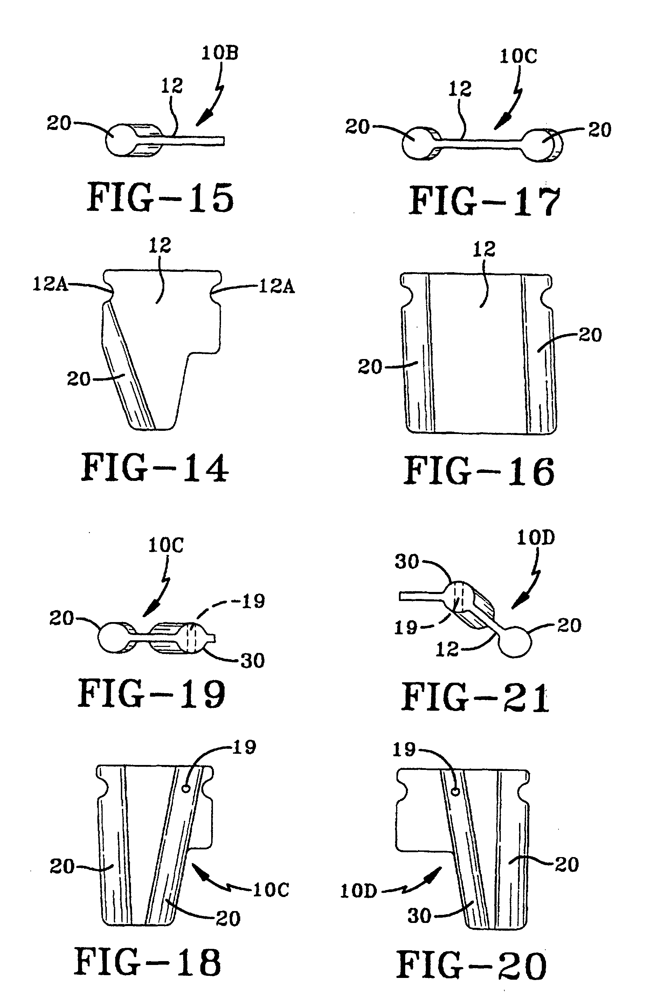

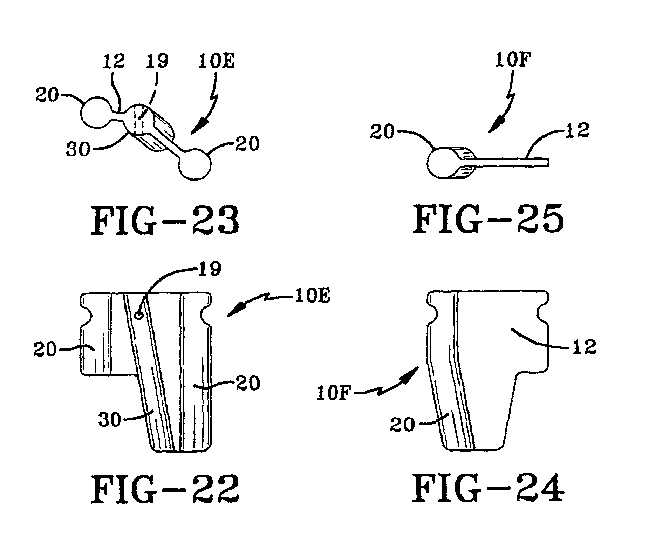

The composite blades (10B through 10F) of the present invention can be fabricated in any number of shapes. Figs. 14 through 25 illustrate a few of these exemplary shapes.

The beneficial attributes of these composite blades (10, 10A through 10F) rest primarily in their ability to prevent crack propagation at the sipes of the tread elements. These blades (10, 10A through 10F) enable the tire designer to use a wider variety of tread compounds or alternatively to design a deeper tread depth than before with a siped tread.

The preferred method of manufacturing the composite blades (10, 10A through 10F) is to form a blade bank (12) of any desired shape, the blank (12) having at least two ends. Placing the end of a blank in a die and molding a second powdered metal material forming a enlarged end at least partially encapsulating the one or more ends of the steel blade blank.

The second powdered metal material can be any material of sufficient durability to withstand the rigors of heat pressure and abrasion the part will be exposed to during the tire curing process. Preferably powdered metal the powdered metal is of the ferrous type commercially sold and made of stainless 316 alloy powdered metal.

The method may further include the steps of bending, crimping, or notching or perforating with holes the blade blank (12) prior to molding the second material.

The method may further include the step of placing the bend (18) of a blade blank (12) into a die, molding a second powdered metal material around or adjacent to the bend (18) forming an enlarged bend cap (30) at least partially encapsulating the bend (18).

Preferably the enlarged ends (20) or bend caps (30) have a substantially rounded cross-section.

As can be seen, the second powdered metal material need only extend partially covering the blade end (14, 16) or bend (18). The remaining portion (12A) of the blade (12) is at least partially used to anchor the blade in the mold as is commonly understood in the art.

The end caps (20) and bends (30) are sufficiently small that the cost of material is very low, the time to mold is consequently very fast. The cost, therefore, is about one third that of trying to bend or otherwise form a round end or bend and unlike a bent round end, there is no open seam to tear or catch rubber in during the tire molding process.

## Claims

1. A blade (10) for use in a tire mold including:
a metal blade blank (12) having at least two ends (14, 16);
at least one end cap (20) having a substantially larger cross-section relative to the metal blade blank (12), the end cap (20) being attached to one end (14, 16) of the metal blade blank **characterized in that** the at least one end cap (20) is of a second material the second material being a powdered metal molded to form an enlarged end at least partially encapsulating the one or more ends (14, 16) of the blade blank (12).

2. The blade (10) of claim 1, wherein at least one of the ends (14, 16) of the metal blade blank (12) is crimped.

3. The blade (10) of claim 1, wherein at least one of the ends (14, 16) of the metal blade blank (12) is notched.

4. The blade (10) of claim 1, wherein the metal blade blank (12) has one or more bends (18) between the two ends (14, 16).

5. The blade (10) of claim 1, wherein the blade (10) further is **characterized by** bend caps (30), the bend caps (30) having substantially rounded cross-section, each bend cap (30) being a powdered metal molded to the metal blade blank (12) at a bend (18).

6. The blade (10) of claim 1, wherein the blade blank (12) is steel.

7. The blade (10) of claim 1, wherein of the end cap (20) cross-section is substantially rounded.

8. A method of fabricating the composite blade (10) for use in a tire mold of claim 1 comprising the steps of:
forming a metal blade blank (12) having at least two ends (14, 16);
**characterized in that** placing one or more ends (14, 16) of the metal blade blank (12) in a die and molding a second powdered metal material forming an end cap (20) at least partially encapsulating the one or more ends (14, 16) of the metal blade blank (12).

9. The method of fabricating a composite blade (10) of claim 8 further include the step of crimping the one or more ends (14, 16) of the metal blade blank (12) prior to molding a second powdered metal material, thus, encapsulating the crimped end (14, 16).

10. The method of fabricating a composite blade (10) of claim 9, further includes the step of notching the one or more ends (14, 16) of the metal blade blank (12) prior to molding the second powdered metal material, thus, encapsulating the notched end (14, 16).

11. The method of fabricating a composite blade (10) for use in a tire mold comprising the steps of
forming a metal blade blank (12) having two or more ends (14, 16) and at least one bend (18) located between the two ends (14, 16); **characterized in that** placing at least one bend (18) of the metal blade blank (12) in a die and molding a second powdered metal material forming a bend cap (30) at least partially encapsulating the bend (18) of the metal blade blank (12).

## Patentansprüche

1. Lamelle (10) zur Verwendung in einer Reifenform mit:
einem Metall-Lamellenrohling (12), der mindestens zwei Enden (14, 16) hat;
mindestens einer Endkappe (20), die relativ zu dem Metall-Lamellenrohling (12) einen wesentlich größeren Querschnitt hat, wobei die Endkappe (20) an einem Ende (14, 16) des Metall-Lamellenrohlings befestigt ist,
**dadurch gekennzeichnet, dass** die mindestens eine Endkappe (20) aus einem zweiten Material ist, welches zweite Material ein pulverisiertes Metall ist, das geformt ist, um ein vergrößertes Ende zu bilden, das zumindest teilweise das eine oder die mehreren Enden (14, 16) des Lamellenrohlings (12) umschließt.

2. Lamelle (10) nach Anspruch 1, wobei mindestens eines der Enden (14, 16) des Metall-Lamellenrohlings (12) gecrimpt ist.

3. Lamelle (10) nach Anspruch 1, wobei mindestens eines der Enden (14, 16) des Metall-Lamellenrohlings (12) eingekerbt ist.

4. Lamelle (10) nach Anspruch 1, wobei der Metall-Lamellenrohling (12) eine oder mehrere Biegungen (18) zwischen den zwei Enden (14, 16) hat.

5. Lamelle (10) nach Anspruch 1, wobei die Lamelle (10) überdies durch Biegekappen (30) gekennzeichnet ist, wobei die Biegekappen (30) einen im Wesentlichen gerundeten Querschnitt haben und jede Biegekappe (30) ein pulverisiertes Metall ist, das an einer Biegung (18) an dem Metall-Lamellenrohling (12) angeformt ist.

6. Lamelle (10) nach Anspruch 1, wobei der Lamellenrohling (12) Stahl ist.

7. Lamelle (10) nach Anspruch 1, wobei der Querschnitt der Endkappe (20) im Wesentlichen gerundet ist.

8. Verfahren zum Herstellen der zusammengesetzten Lamelle (10) zur Verwendung in einer Reifenform nach Anspruch 1, das die Schritte umfasst, dass
ein Metall-Lamellenrohling (12) mit mindestens zwei Enden (14, 16) gebildet wird; **dadurch gekennzeichnet, dass** ein oder mehrere Enden (14, 16) des Metall-Lamellenrohlings (12) in einem Gesenk angeordnet werden und ein zweites pulverisiertes Metallmaterial geformt wird, das eine Endkappe (20) bildet, die das eine oder die mehreren Enden (14, 16) des Metall-Lamellenrohlings (12) zumindest teilweise umschließt.

9. Verfahren zur Herstellung einer zusammengesetzten Lamelle (10) nach Anspruch 8, das überdies den Schritt umfasst, dass das eine oder die mehreren Enden (14, 16) des Metall-Lamellenrohlings (12) vor dem Formen eines zweiten pulverisierten Metallmaterials gecrimpt werden, womit folglich das gecrimpte Ende (14, 16) umschlossen wird.

10. Verfahren zur Herstellung einer zusammengesetzten Lamelle (10) nach Anspruch 9, das überdies den Schritt umfasst, dass das eine oder die mehreren Enden (14, 16) des Metall-Lamellenrohlings (12) vor einem Formen des zweiten pulverisierten Metallmaterials eingekerbt werden, womit folglich das eingekerbte Ende (14, 16) umschlossen wird.

11. Verfahren zur Herstellung einer zusammengesetzten Lamelle (10) zur Verwendung in einer Reifenform, das die Schritte aufweist, dass ein Metall-Lamellenrohling (12) mit zwei oder mehreren Enden (14, 16) und mindestens einer zwischen den zwei Enden (14, 16) angeordneten Biegung (18) gebildet wird; **dadurch gekennzeichnet, dass** mindestens eine Biegung (18) des Metall-Lamellenrohlings (12) in einem Gesenk angeordnet wird und dass ein zweites pulverisiertes Metallmaterial geformt wird, das eine Biegekappe (30) bildet, die die Biegung (18) des Metall-Lamellenrohlings (12) zumindest teilweise umschließt.

## Revendications

1. Lame (10) à utiliser dans un moule pour bandage pneumatique, englobant :
une ébauche de lame métallique (12) comportant au moins deux extrémités (14, 16) ;
au moins un recouvrement externe (20) possédant une section transversale essentiellement supérieure à celle de l'ébauche de lame métallique (12), le recouvrement externe (20) étant fixé à une extrémité (14, 16) de l'ébauche de lame métallique, **caractérisée en ce que** ledit ou lesdits recouvrements terminaux (20) est ou sont constitués d'une deuxième matière, la deuxième matière étant un métal pulvérulent qui a été moulé pour former une extrémité élargie encapsulant au moins en partie une ou plusieurs extrémités (14, 16) de l'ébauche de lame (16).

2. Lame (10) selon la revendication 1, dans laquelle au moins une des extrémités (14, 16) de l'ébauche de lame métallique (12) est sertie.

3. Lame (10) selon la revendication 1, dans laquelle au moins une des extrémités (14, 16) de l'ébauche de lame métallique (12) comprend une encoche.

4. Lame (10) selon la revendication 1, l'ébauche de lame métallique (12) possède un ou plusieurs coudes (18) entre les deux extrémités (14, 16).

5. Lame (10) selon la revendication 1, dans laquelle la lame (10) est en outre **caractérisée par** des recouvrements de coudes (30), les recouvrements de coudes (30) possédant essentiellement une section transversale arrondie, chaque recouvrement de coude (30) étant constitué d'un métal pulvérulent moulé sur l'ébauche de lame métallique (12) à un coude (18).

6. Lame (10) selon la revendication 1, dans laquelle l'ébauche de lame (12) est réalisée en acier.

7. Lame (10) selon la revendication 1, dans laquelle la section transversale du recouvrement terminal (20) est de forme essentiellement arrondie.

8. Procédé de fabrication de la lame composite (10) à utiliser dans un moule pour bandage pneumatique selon la revendication 1, comprenant les étapes consistant à :
former une ébauche de lame métallique (12) comportant au moins deux extrémités (14, 16) ;
**caractérisé par** le fait de placer une ou plusieurs extrémités (14, 16) de l'ébauche de lame métallique (12) dans une matrice et mouler une deuxième matière de métal pulvérulent formant un recouvrement terminal (20) encapsulant au moins en partie ladite ou lesdites extrémités (14, 16) de l'ébauche de lame métallique (12).

9. Procédé de fabrication d'une lame composite (10) selon la revendication 8, englobant en outre l'étape consistant à sertir ladite ou lesdites extrémités (14, 16) de l'ébauche de lame métallique (12) avant le moulage d'une deuxième matière de métal pulvérulent, en encapsulant de cette manière les extrémités serties (14, 16).

10. Procédé de fabrication d'une lame composite (10) selon la revendication 8, englobant en outre l'étape consistant à pratiquer une ou plusieurs encoches dans ladite ou lesdites extrémités (14, 16) de l'ébauche de lame métallique (12) avant le moulage d'une deuxième matière de métal pulvérulent, en encapsulant de cette manière les extrémités serties (14, 16).

11. Procédé de fabrication d'une lame composite (10) à utiliser dans un moule pour bandage pneumatique, comprenant les étapes consistant à
former une ébauche de lame métallique 12 comportant deux extrémités ou plus (14, 16) et au moins un coude (18) disposé entre les deux extrémités (14, 16) ;
**caractérisé par** le fait de placer au moins un coude (18) de l'ébauche de lame métallique (12) dans une matrice et mouler une deuxième matière de métal pulvérulent formant un recouvrement de coude (30) encapsulant au moins en partie le coude (18) de l'ébauche de lame métallique (12).
